# EUROPEAN PATENT SPECIFICATION

(11) **EP 2 501 025 B1**
(45) Date of publication and mention of the grant of the patent: **21.08.2013**
(21) Application number: 12159549.0
(22) Date of filing: 15.03.2012
(51) Int. Cl.: H02M 1/08, H02M 3/156

(54) **Power supply circuit comprising two DC/DC converters**
Stromversorgungsschaltung mit zwei DC/DC Wandlern
Circuit d'alimentation électrique avec deux convertisseurs continu/continu

(30) Priority: 15.03.2011 JP 2011057082
(43) Date of publication of application: 19.09.2012
(73) Proprietor: Funai Electric Co., Ltd., Daito-shi Osaka 574-0013 (JP)
(72) Inventor: Yamagami, Susumu, Daito-shi, Osaka 574-0013 (JP)
(74) Representative: Grünecker, Kinkeldey, Stockmair & Schwanhäusser

(56) References cited:
- JP-A- 9 233 809
- JP-A- 2001 078 100
- US-A1- 2005 168 198
- US-A1- 2009 097 286

## Description

### Background of the Invention

The present invention relates to a power supply circuit that comprises multiple DC-DC converters and outputs multiple DC voltages converted by the DC-DC converters.

Power supply circuits that comprise multiple switch-mode DC-DC converters (hereinafter referred to as "converters") to output different DC voltages from the converters are known in the prior art. In such a power supply circuit, each of the converters has a self-ascillation circuit that generates a pulse voltage from a DC input voltage and a smoothing circuit that smooths the generated pulse voltage and steps up or steps down the voltage to obtain a DC output voltage having a different voltage value from the input voltage. The above described self - oscillation circuit has an oscillator so that it can generate a pulsating voltage even without a pulse signal input from outside. The converters can obtain different output voltages with wide range of voltages by having different duty ratios of input voltages or pulsating voltages, or by having different types, step down type and step up type, of smoothing circuits.

However, in the self-oscillation circuit in each of the converters, a noise component superimposed on the input voltage may cause the pulsating voltage to be disturbed, thus causing the output voltage to be unstable. Therefore, each of the converters has a noise filter circuit, which removes a noise component from the input voltage. This enables stable oscillation in the self-oscillation circuit so as to maintain the output voltage constant.

### Brief Summary of the Invention

Meanwhile, there has been a need to reduce the overall size and manufacturing costs of the above-described power supply circuit while maintaining a stable voltage output and a wide range of output voltage in each of the converters.

In this regard, Japanese Laid-open Patent Publication No. 2006-20426 discloses sharing of an oscillator in a self-oscillation circuit by multiple converters. However, it is difficult to sufficiently reduce the size and manufacturing costs of the circuit only with this technique.

Further, Japanese Laid-open Patent Publication No. 2001-78100 discloses a power supply circuit in which only one of the converters is provided with a self-oscillation circuit and the other converter is provided with a charge pump circuit in place of a self-oscillation circuit. In this power supply circuit, the charge pump circuit uses a pulsating voltage generated by the self-oscillation circuit and converts it into another voltage. However, the charge pump circuit has the property that the output voltage is dependent on the input voltage, which is fixed at the pulsating voltage of the self-oscillation circuit.

Therefore, it is difficult for the other converter described above to cover a wide range of output voltages.

Japanese Laid-open Patent Publication No. Hei 6-78530 discloses a power supply circuit comprising a converter and a voltage multiplier circuit that multiplies the output voltage of the converter by a certain factor. However, the voltage multiplier circuit can only produce a voltage equal to an input voltage multiplied by an integer. Moreover, the input voltage is set at the output voltage of the converter. Therefore, the range of possible output voltages is limited.

Further, Japanese Laid-open Patent Publication No. Hei 11-122843 discloses a power supply circuit equipped with a battery that has a converter in which the primary, secondary, and tertiary sides are transformer coupled and that rectifies excited energy stored in the tertiary winding of the transformer to charge the battery. However, this power supply circuit cannot meet the above described need.

An object of the present invention is to provide a power supply circuit that can be reduced in circuit size and manufacturing cost while ensuring stable voltage output and a wide range of output voltage.

According to the present invention, this object is achieved by a power supply circuit comprising: a first DC-DC converter including a self -oscillation circuit that generates a first pulsating voltage from a first DC input voltage and a first smoothing circuit that smooths the first pulsating voltage to produce a first output voltage; and a second DC-DC converter including a switching element that is driven by the first pulsating voltage generated by the self-oscillation circuit and switches a second DC input voltage based on the first pulsating voltage to produce a second pulsating voltage, and a second smoothing circuit that smooths the second pulsating voltage to produce a second output voltage, wherein the power supply circuit outputs a first DC voltage converted by the first DC-DC converter and a second DC voltage converted by the second DC-DC converter.

By removing a noise component from the first input voltage, the first pulsating voltage can be stably generated by the self-oscillation circuit. Therefore, both the first and second output voltages produced based on the first pulsating voltage can be also stabilized.

Further, by adjusting the waveform of the first or second input voltage or the first pulsating voltage, the first and second output voltages can be changed in a wide range.

Moreover, in the second DC-DC converter, the first pulsating voltage generated by the self-oscillation circuit in the first DC-DC converter is used. Based on the first pulsating voltage, the second input voltage is converted into the pulsating voltage by the switching element. Then, based on this second pulsating voltage, the second output voltage is produced. Thus, the second DC-DC converter does not require a self-oscillation circuit for generation of a pulsating voltage. This can eliminate the need for a noise filter circuit or other device, which is required to stabilize the output of a self-oscillation circuit, on the second DC-DC converter side. Accordingly, the number of parts can be reduced so that the circuit size and the manufacturing cost can be reduced.

Preferably, the switching element comprises a field effect transistor.

While the novel features of the present invention are set forth in the appended claims, the present invention will be better understood from the following detailed description taken in conjunction with the drawing.

### Brief Description of the Drawing

The present invention will be described hereinafter with reference to the annexed drawing. It is to be noted that the drawing is shown for the purpose of illustrating the technical concept of the present invention or embodiments thereof, wherein:

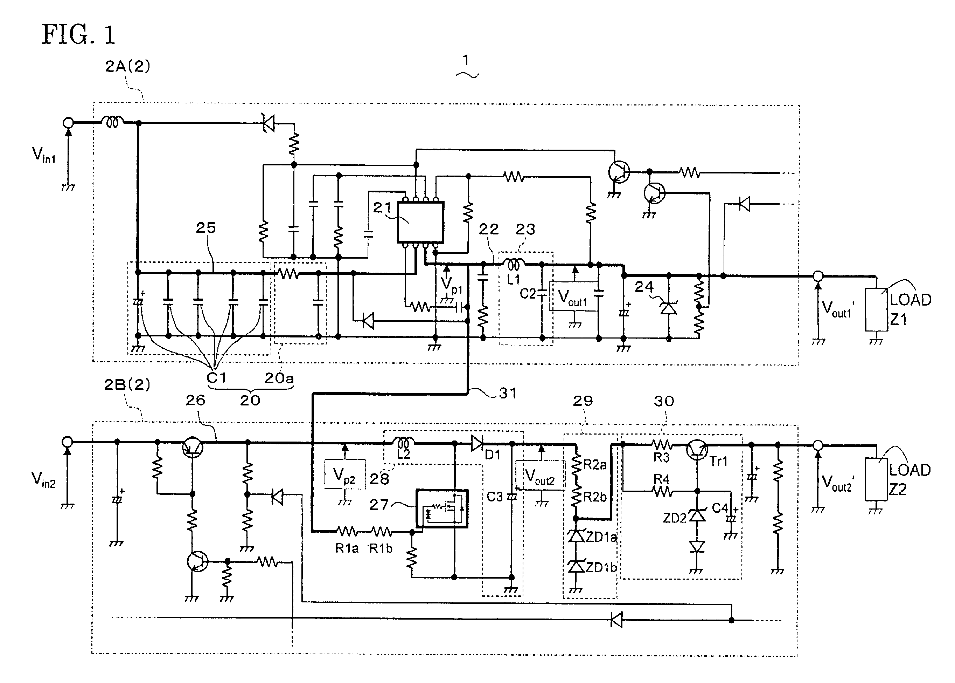

FIG. 1 is a circuit diagram of a power supply circuit according to one embodiment of the present invention.

### Detailed Description of the Invention

Referring now to the accompanying drawing, a power supply circuit according to one embodiment of the present invention is described. It is to be noted that the following description of preferred embodiment of the present invention has been presented for purposes of illustration and description, and is not intended to be exhaustive or to limit the present invention to the precise form disclosed.

FIG. 1 shows the configuration of the power supply circuit according to this embodiment. This power supply circuit 1 comprises multiple (e.g. two) DC-DC converters (hereinafter referred to simply as "converters") 2 so as to output different DC voltages having different voltage values from one another. The converters 2 are switch mode converters. The power supply circuit 1 is provided in, for example, an electrical apparatus such as a television receiver.

At least one converter (hereinafter, referred to as "converter") 2A (first DC-DC converter) out of the converters 2 has a noise filter circuit 20 for removing a noise component from a first DC input voltage Vᵢₙ₁, which is input to the converter 2A, and a self-oscillation circuit 21 that generates a first pulsating voltage Vₚ₁ from the first input voltage Vᵢₙ₁ after a noise component is removed by the noise filter circuit 20.

The converter 2A also has a first power supply line 22 that transfers the first pulsating voltage Vₚ₁ generated by the self-oscillation circuit 21 to a load Z1 connected to the converter 2A and a first smoothing circuit 23 that smooths and steps down the first pulsating voltage Vₚ₁ transferred through the first power supply line 22 to produce a DC voltage Vₒᵤₜ₁ (first output voltage). Further, the converter 2A has a stabilizing element 24 that steps the DC voltage Vₒᵤₜ₁ produced by the first smoothing circuit 23 down to a first output voltage Vₒᵤₜ₁' and stabilizes the voltage to output it to the load Z1. The first output voltage Vₒᵤₜ₁' is lower than the first input voltage Vᵢₙ₁ and thus the converter 2A is a step-down converter.

The noise filter circuit 20 has bypass capacitors C1 that shunt AC noise components superimposed on the first input voltage Vᵢₙ₁ to ground and an RC circuit 20a that is a low-pass filter to especially remove a high-frequency component of the noise components. The bypass capacitors C1 are connected in parallel to an input line 25 that transfers the first input voltage Vᵢₙ₁ to the self-oscillation circuit 21. The multiple bypass capacitors C1 are provided so as to increase the overall capacitance. Thereby, noise components in a wide range of frequency can be removed. Preferably, the bypass capacitors C1 are ceramic capacitors, tantalum capacitors, or low equivalent series resistance (ESR) capacitors. The RC circuit 20a can be a general noise filter circuit. The bypass capacitors C1 and the RC circuit 20a remove noise components from the first input voltage Vᵢₙ₁ to thereby stabilize the first pulsating voltage Vₚ₁ generated from the first input voltage Vᵢₙ₁ by the self-oscillation circuit 21.

The self-oscillation circuit 21 comprises a step-down converter integrated circuit (IC) including an oscillator. The self-oscillation circuit 21 can generate the first pulsating voltage Vₚ₁ from the first input voltage Vᵢₙ₁ even without a pulse signal input from outside. The self-ascillation circuit 21 converts the first input voltage Vᵢₙ₁ into a pulsating voltage based on a pulse signal generated by the oscillator and further steps down the pulsating voltage. The voltage obtained in this manner is the first pulsating voltage Vₚ₁. The duty ratio of the pulse signal generated by the oscillator can be fixed or variable.

The first smoothing circuit 23 comprises a choke coil L1 connected in series to the first power supply line 22 and a capacitor C2 connected in parallel to the post-stage of the choke coil L1 on the first power supply line 22. When the first pulsating voltage Vₚ₁, which is transferred through the first power supply line 22, is higher than or equal to a predetermined level, the capacitor C2 is charged. In contrast, when the first pulsating voltage Vₚ₁ is lower than the predetermined level, the capacitor C2 is discharged. In this manner, the capacitor C2 adjusts the amount of current passing through the first power supply line 22 so as to keep it close to constant, thereby smoothing the first pulsating voltage Vₚ₁. However, with only the capacitor C2, a small ripple remains in the current. The choke coil L1 generates an electromotive force so as to prevent a change of current due to the ripple, thus producing an induced current. This can maintain the current constant, so that the DC voltage Vₒᵤₜ₁ can be obtained. The DC voltage Vₒᵤₜ₁ is output to the stabilizing element 24 through the first power supply line 22.

The stabilizing element 24 comprises a zener diode, which is connected in parallel to the first power supply line 22 under reverse bias. This zener diode lowers the DC voltage Vₒᵤₜ₁, which is output from the first smoothing circuit 23, to a given breakdown voltage and keeps the voltage constant. This constant voltage is the first output voltage Vₒᵤₜ₁', which is applied to the load Z1

The converter 2B (second DC-DC converter) other than the converter 2A has a second power supply line 26 that transfers a second DC input voltage Vᵢₙ₂, which is input to the converter 2B, to a load Z2 connected to the converter 2B, and a switching element 27 that switches the second input voltage Vᵢₙ₂, which is transferred through the second power supply line 26, based on the first pulsating voltage Vₚ₁ generated by the self-oscillation circuit 21 so as to produce a second pulsating voltage Vₚ₂. The switching element 27 is supplied with the first pulsating voltage Vₚ₁ and is driven by the voltage.

The converter 2B also has a second smoothing circuit 28 that smooths and steps up the second pulsating voltage Vₚ₂ produced by the switching element 27 to produce a DC voltage Vₒᵤₜ₂ (second output voltage). Further, the converter 2B has a protection circuit 29 that steps down the DC voltage Vₒᵤₜ₂ produced by the second smoothing circuit 28 and keeps the voltage constant, and a series regulator 30 that further lowers the voltage stepped down by the protection circuit 29 to a constant second output voltage Vₒᵤₜ₂' and outputs the voltage to the load Z2. The second output voltage Vₒᵤₜ₂' is higher than the second input voltage Vᵢₙ₂, and thus the converter 2B is a step-up converter.

The switching element 27 comprises a metal-oxide -semiconductor field-effect transistor (MOSFET). This MOSFET is connected in parallel to the second power supply line 26, wherein the source is connected to the second power supply line 26 and the drain is grounded. The gate of the above MOSFET is connected to a pulsating current transmission line 31 that branches from the first power supply line 22. The pulsating current transmission line 31 transfers the first pulsating voltage Vₚ₁, i.e. voltage signals before the passage through the choke coil L1, which is input to the above gate. The pulsating current transmission line 31 is provided with resistors R1a and R1b for limiting a current input to the above gate.

The switching element 27 is switched on and off according to whether or not the first pulsating voltage Vₚ₁ is higher than or equal to the driving voltage of the switching element 27 itself so as to control current flow between the drain and the source. The second input voltage Vᵢₙ₂ causes a current to flow through the second power supply line 26. The switching element 27 sinks the current to ground or passes the current by the above described switching operation. In this manner, the switching element 27 switches the second input voltage Vᵢₙ₂ to pulse it, thus obtaining the pulsed, second pulsating voltage Vₚ₂ with two levels, High and Low.

The second smoothing circuit 28 comprises a choke coil L2, a diode D1, and a capacitor C3. The choke coil L2 is connected in series to the pre-stage of the switching element 27 on the second power supply line 26. The diode D1 is connected in series to the post-stage of the switching element 27 on the second power supply line 26 with its anode facing the switching element 27. The capacitor C3 is connected in parallel to the post-stage of the switching element 27.

When the switching element 27 is in on state (when the second pulsating voltage Vp₂ is Low), the choke coil L2 stores energy with a current flowing in it so that the output voltage is Low. When the switching element 27 is switched off (when the second pulsating voltage Vₚ₂ becomes High), the choke coil L2 releases stored energy to maintain the current. The released energy is added to the second pulsating voltage Vₚ₂ (voltage is stepped up), so that the voltage output from the choke coil L2 is High. The capacitor C3 is charged when the voltage output from the choke coil L2 is High and discharged when the output voltage is Low. Thus, the voltage output from the capacitor C3 is the DC voltage Vₒᵤₜ₂ obtained by smoothing the second pulsating voltage Vₚ₂. The diode D1 prevents current from flowing in the reverse direction, toward the input side, at the time of discharge.

The protection circuit 29 is a general shunt regulator. The protection circuit 29 has resistors R2a and R2b connected in series to the second power supply line 26 and reverse biased zener diodes ZD1a and ZD1b connected in parallel to the post-stage of the resistors R2a and R2b on the second power supply line 26. The zener diodes ZD1a and ZD1b are also connected in parallel to the load Z2. The protection circuit 29 lowers the DC voltage Vₒᵤₜ₂, which is produced by the second smoothing circuit 28, with the use of the resistors R2a and R2b and outputs it to the series regulator 30. Assume that the DC voltage Vₒᵤₜ₂ is about to suddenly increase for such a reason that the load Z2 is light, and that the voltage output from the protection circuit 29 is about to exceed the breakdown voltage inherent in the zener diodes ZD1a and ZD1b. In such a case, the protection circuit 29 reduces the output voltage by the excess by dividing the current flowing through the second power supply line 26 between both the zener diodes ZD1a and ZD1b and the load Z2, thus serving as a slicer. On the other hand, when the output voltage does not exceed the above breakdown voltage, the protection circuit 29 keeps the output voltage unchanged. In this manner, the voltage output from the protection circuit 29 can be maintained lower than or equal to the above breakdown voltage. For example, in the case where the above breakdown voltage is 32V, the voltage output from the protection circuit 29 is lower than or equal to 32V.

The series regulator 30 is an output stabilization circuit that steps down and stabilizes the voltage output from the protection circuit 29. The series regulator 30 includes a transistor Tr1, a zener diode ZD2, resistors R3 and R4, and an electrolytic capacitor C4. The transistor Tr1 is an NPN transistor inserted in the second power supply line 26 and connected in series to the load Z2. The transistor Tr1 has a collector connected via the resistor R3 to the second smoothing circuit 28 side of the second power supply line 26 and an emitter connected to the load Z2 side of the second power supply line 26. The base of the transistor Tr1 is connected to and grounded via the zener diode ZD2 and the electrolytic capacitor C4, which are connected in parallel to each other. The zener diode ZD2 is reverse biased with the cathode connected to the base of the transistor Tr1. When the output side of the series regulator 30 is shorted to ground, the resistor R3 is broken to thereby prevent heat generation of the transistor Tr1. The resistor R4 is inserted in series in a line that branches from the pre-stage of the resistor R3 on the second power supply line 26 and that is connected to the base of the transistor Tr1

In the series regulator 30, the voltage output from the protection circuit 29 is supplied via the resistor R4 to the zener diode ZD2 and the electrolytic capacitor C4. When the supplied voltage is at any level greater than or equal to the breakdown voltage of the zener diode ZD2, a constant voltage obtained by subtracting the amount of voltage drop between the base and emitter of the transistor Tr1 from the breakdown voltage is output, as the second output voltage Vₒᵤₜ₂', to the load Z2. For example, in the case where the breakdown voltage is 27.6V and the voltage drop between the base and emitter of the transistor Tr1 is 0.6V, the output voltage is 27V. On the other hand, when the above-described supplied voltage is lower than the breakdown voltage of the zener diode ZD2, a voltage obtained by subtracting the above amount of voltage drop from the discharge voltage of the electrolytic capacitor C4 is output to the load Z2.

In one example, the first and second input voltages Vᵢₙ₁ and Vᵢₙ₂ are 24V, and the first and second output voltages Vₐᵤₜ₁' and Vₒᵤₜ₂' are 3V and 27V, respectively. The first and second input voltages Vᵢₙ₁ and Vᵢₙ₂ may be equal to or different from each other. The first and second output voltages Vₒᵤₜ₁' and Vₒᵤₜ₂' can be regulated by increasing or decreasing the first and second input voltages Vᵢₙ₁ and Vᵢₙ₂, respectively, or by controlling the duty ratio of pulse signals generated by the oscillator in the self-oscillation circuit 21 (the duty ratio of the first pulsating voltage Vₚ₁). This control of the duty ratio enables both of the first and second output voltages Vₒᵤₜ₁' and Vₒᵤₜ₂' to be regulated at the same time. Further, in the case where two or more converters 2B are provided in the power supply circuit 1, the second output voltages Vₒᵤₜ₂' of the converters 2B are different from each other.

The voltage conversion processes in the converters 2A and 2B are now described. In the converter 2A, the first input voltage Vᵢₙ₁ is converted to the first pulsating voltage Vₚ₁ by the self-oscillation circuit 21. The first pulsating voltage Vₚ₁ is then smoothed and stepped down to the DC voltage Vₒᵤₜ₁ by the first smoothing circuit 23. Subsequently, the DC voltage Vₒᵤₜ₁ is stepped down, by the stabilizing element 24, to the constant first output voltage Vₒᵤₜ₁' (Vₒᵤₜ₁'< Vᵢₙ₁).

In the converter 2B, the second input voltage Vᵢₙ₂ is switched by the switching element 27 based on the first pulsating voltage Vₚ₁ output from the self-oscillation circuit 21, which results in the second pulsating voltage Vₚ₂. The second pulsating voltage Vₚ₂ is then smoothed and stepped up to the DC voltage Vₒᵤₜ₂ by the second smoothing circuit 28. The DC voltage Vₒᵤₜ₂ is stepped down, by the protection circuit 29 and the series regulator 30, to the constant second output voltage Vₒᵤₜ₂' (Vₒᵤₜ₂'> Vᵢₙ₂).

Thus, the power supply circuit 1 outputs the first and second output voltages Vₒᵤₜ₁' and V ₒᵤₜ₂' converted by the converters 2A and 2B.

In this embodiment, by removing a noise component from the first input voltage Vᵢₙ₁, the first pulsating voltage Vₚ₁ can be stably generated by the self-oscillation circuit 21. Therefore, both the first and second output voltages Vₒᵤₜ₁' and Yₒᵤₜ₂' produced based on the first pulsating voltage Vₚ₁ can be also stabilized.

Further, by adjusting the duty ratio of the first or second input voltage Vᵢₙ₁ or Vᵢₙ₂, or the first pulsating voltage Vₚ₁ (the duty ratio of pulse signals generated by the oscillator in the self- oscillation circuit 21), the first and second output voltages Vₒᵤₜ₁' and Vₒᵤₜ₂' can be changed in a wide range.

Moreover, in the converter 2B, the first pulsating voltage Vₚ₁ generated by the self-oscillation circuit 21 in the converter 2A is used. Based on the first pulsating voltage Vₚ₁, the second input voltage Vᵢₙ₂ is converted into the pulsating voltage by the switching element 27. Then, based on this second pulsating voltage Vₚ₂, the second output voltage Vₒᵤₜ₂' is produced. Thus, the converter 2B does not require a self- oscillation circuit for generation of a pulsating voltage. This can eliminate the need for a noise filter circuit or other device, which is required to stabilize the output of a self-oscillation circuit, on the converter 2B side. Accordingly, the number of parts can be reduced so that the circuit size and the manufacturing cost can be reduced.

The present invention has been described above using a presently preferred embodiment, but those skilled in the art will appreciate that various modifications are possible. For example, the converter 2A may be a step-up converter, where the converter IC in the self-oscillation circuit 21 and the first smoothing circuit 23 are also of the step-up type. The converter 2B may be a step-down converter, where the second smoothing circuit 28 is also of the step-down type. Further, either the first smoothing circuit 23 or the second smoothing circuit 28 may be a smoothing circuit in which the primary and secondary sides are transformer coupled so that a pulsating voltage is smoothed on the secondary side.

## Claims

1. A power supply circuit (1) comprising:
a first DC-DC converter (2A) including a self-oscillation circuit (21) that generates a first pulsating voltage from a first DC input voltage and a first smoothing circuit (23) that smooths the first pulsating voltage to produce a first output voltage; and
a second DC-DC converter (2B) including a switching element (27) that is driven by the first pulsating voltage generated by the self-oscillation circuit (21) and switches a second DC input voltage based on the first pulsating voltage to produce a second pulsating voltage, and a second smoothing circuit (28) that smooths the second pulsating voltage to produce a second output voltage,
wherein the power supply circuit (1) outputs a first DC voltage converted by the first DC-DC converter (2A) and a second DC voltage converted by the second DC-DC converter (2B).

2. The power supply circuit (1) according to claim 1, wherein the switching element (27) comprises a field effect transistor.

## Patentansprüche

1. Stromversorgungsschaltung (1), die umfasst:
einen ersten DC/DC-Wandler (2A), der eine selbstschwingende Schaltung (21) (self-oscillation circuit), welche eine erste pulsierende Spannung aus einer ersten DC-Eingangsspannung erzeugt, und eine erste Glättungsschaltung (23) aufweist, welche die erste pulsierende Spannung glättet, um eine erste Ausgangsspannung zu erzeugen; und
einen zweiten DC/DC-Wandler (2B), der ein Schaltelement (27) aufweist, das von der ersten pulsierenden Spannung, die von der selbstschwingenden Schaltung (21) erzeugt wird, angesteuert wird, und eine zweite DC-Eingangsspannung basierend auf der ersten pulsierenden Spannung schaltet, um eine zweite pulsierende Spannung zu erzeugen, und eine zweite Glättungsschaltung (28), welche die zweite pulsierende Spannung glättet, um eine zweite Ausgangsspannung zu erzeugen,
wobei die Stromversorgungsschaltung (1) eine erste, von dem ersten DC/DC-Wandler (2A) umgewandelte DC-Spannung und eine zweite, von dem zweiten DC/DC-Wandler (2B) umgewandelte DC-Spannung ausgibt.

2. Stromversorgungsschaltung (1) nach Anspruch 1, wobei das Schaltelement (27) einen Feldeffekttransistor umfasst.

## Revendications

1. Circuit d'alimentation (1) comprenant :
un premier convertisseur CC-CC (2A) incluant un circuit d'auto-oscillation (21) (self-oscillation circuit), générant une première tension de pulsation à partir d'une première tension d'entrée en courant continu, et un premier circuit de lissage (23) qui lisse la première tension de pulsation pour produire une première tension de sortie ; et
un second convertisseur CC-CC (2B) incluant un élément de commutation (27) qui est commandé par la première tension de pulsation générée par le circuit d'auto-oscillation (21) et qui commute une seconde tension d'entrée en courant continu en se basant sur la première tension de pulsation pour produire une seconde tension de pulsation, et un second circuit de lissage (28) qui lisse la seconde tension de pulsation pour produire une seconde tension de sortie,
dans lequel le circuit d'alimentation (1) fournit en sortie une première tension en courant continu convertie par le premier convertisseur CC-CC (2A) et une seconde tension en courant continu convertie par le second convertisseur CC-CC (2B).

2. Circuit d'alimentation (1) selon la revendication 1, dans lequel l'élément de commutation (27) comprend un transistor à effet de champ.
